# EUROPEAN PATENT APPLICATION

(11) **EP 4 834 629 A1**
(43) Date of publication of application: **04.11.2026**
(21) Application number: 26175421.2
(22) Date of filing: 29.04.2026
(51) Int. Cl.: B60K 15/05

(54) **FUELING OR CHARGING PORT COVER DEVICE AND VEHICLE**

(30) Priority: 30.04.2025 CN 202510575088
(71) Applicant: Illinois Tool Works Inc., Glenview IL 60025 (US)
(72) Inventor: SUN, Yuan, Glenview, 60025 (US)
(74) Representative: HGF

(57) **Abstract**

The present disclosure provides a fueling or charging port cover device comprising a housing, a cover, a driving member and a switch assembly. The cover has an open position and a closed position relative to the housing. The driving member is connected to the cover and is configured to drive the cover to move between the open position and the closed position relative to the housing. The switch assembly comprises an elastic device configured to provide a holding force for the switch assembly. The switch assembly has a holding state and an actuated state. When the driving member drives the cover to reach the closed position, the switch assembly is maintained in the holding state by the holding force provided by the elastic device, and causes the driving member to stop driving the cover, thereby maintaining the cover in the closed position. When the switch assembly reaches the actuated state as the movement of the cover overcomes the holding force, the switch assembly is actuated, such that the driving member is allowed to drive the cover to move from the closed position toward the open position.

## Description

### Technical Field

The present disclosure is related to a fueling or charging port cover device and vehicle, and in particular, to an easy-to-operate fueling or charging port cover device for a vehicle.

### Background

The fueling port or charging port cover device of a vehicle is used to open and close the fueling port or charging port of the vehicle. The cover is pivotally mounted on the vehicle body. The cover has an open position and a closed position, and is movable between the open position and the closed position. When fueling or charging is not required, the cover is in the closed position; when fueling or charging is required, the cover is in the open position.

Typically, a housing that mates with the cover is provided with a plurality of stopping bumps. During the closing process of the cover, the closing movement is stopped when the cover contacts the stopping bumps, and the cover can be maintained in the closed position. Some fueling or charging port cover devices include a microswitch. When the cover is in the closed position, the opening operation of the cover can be triggered by actuating the microswitch. For example, when the cover is in the closed position, the cover is moved toward the microswitch to actuate the microswitch by pressing the outer side of the cover. When no external force is applied, the cover does not actuate the microswitch, and the stopping bumps can prevent the microswitch from being accidentally actuated.

### Summary of Invention

The inventor of the present disclosure has found, after a long-term observation and study, that when an operator presses an outer side of the cover to trigger the opening of the cover, the operator is typically required to press on a particular region of the cover which is relatively small. If the operator presses on a position out of the particular region, the switch cannot be actuated to initiate the opening movement of the cover, thereby affecting the operating comfort of the operator.

To at least partially solve the problem, according to a first aspect of the present disclosure, the present disclosure provides a fueling or charging port cover device comprising a housing, a cover, a driving member and a switch assembly. The housing has a cavity. The cover has an open position and a closed position relative to the housing. The cover covers the cavity in the closed position and exposes the cavity in the open position. The driving member is connected to the cover and is configured to drive the cover to move between the open position and the closed position relative to the housing. The switch assembly comprises an elastic device configured to provide a holding force for the switch assembly. The switch assembly has a holding state and an actuated state. When the driving member drives the cover to reach the closed position, the switch assembly is maintained in the holding state by the holding force provided by the elastic device, and causes the driving member to stop driving the cover, thereby maintaining the cover in the closed position. When the switch assembly reaches the actuated state as the movement of the cover overcomes the holding force, the switch assembly is actuated, such that the driving member is allowed to drive the cover to move from the closed position toward the open position.

In some embodiments, the elastic device further has a restoring force for returning the switch assembly from the actuated state to the holding state.

In some embodiments, one of the housing and the cover is connected to the switch assembly, and the other is provided with an actuating portion. The actuating portion cooperates with the switch assembly to enable the switch assembly to reach the holding state and the actuated state.

In some embodiments, the cover comprises a pressable region, and the area of the pressable region is not less than 60% of the area of the cover.

In some embodiments, the switch assembly comprises a movable member. At least a portion of the movable member is elastic to form the elastic device, and at least a portion of the movable member is configured to move under the drive of the actuating portion to enable the switch assembly to reach the holding state and the actuated state.

In some embodiments, the switch assembly comprises a movable member and an elastic member. The elastic member forms the elastic device. The elastic member is connected to the movable member and provides an elastic force to the movable member. The movable member is configured to move under the drive of the actuating portion to enable the switch assembly to reach the holding state and the actuated state.

In some embodiments, the switch assembly comprises an actuated member. The movable member is movable relative to the actuated member to actuate the actuated member, thereby causing the switch assembly to reach the actuated state.

In some embodiments, the cover is pivotally connected to the housing. When the driving member drives the cover to move from the open position toward the closed position, the driving member stopping driving the cover to rotate in response to the actuating portion of the cover coming into contact with the movable member.

In some embodiments, the switch assembly is configured to change from the holding state to the actuated state when a certain pressing force is applied to the cover.

In some embodiments, the driving member is configured to drive the cover to move from the open position toward the closed position when the cover is in the open position and the switch assembly is actuated to reach the actuated state.

In some embodiments, the cover further comprises a cover body. When the cover is in the closed position, there is a continuous gap between the cover boy and the housing.

In some embodiments, the switch assembly comprises a support member. The support member is connected to the housing or the cover and supports the movable member, the elastic member, and the actuated member.

In some embodiments, the actuated member comprises a microswitch. The driving member drives the cover to move from the closed position toward the open position in response to the actuated member being actuated by the movable member.

In some embodiments, the cover further comprises a connecting portion. The cover is rotatably connected to the housing through the connecting portion. The actuating portion or the switch assembly is connected to a first end of the cover body and the connecting portion is connected to a second end of the cover body, which is opposite to the first end.

In some embodiments, the cover further comprises a seal disposed on one side of the cover body. The seal is elastic and contacts the housing when the cover is in the closed position.

According to a second aspect of the present disclosure, the present disclosure provides a fueling or charging port cover device comprising a housing, a cover, a driving member, a switch assembly and an actuating portion. The housing has a cavity. The cover has a pivoting portion and is pivotally connected to the housing via the pivoting portion. The cover has an open position and a closed position relative to the housing, and covers the cavity in the closed position and exposes the cavity in the open position. The driving member is drivingly connected to the cover to drive the cover to move between the open position and the closed position relative to the housing. The switch assembly is disposed on the housing, and the actuating portion extends from an end of the cover remote from the pivoting portion. When the driving member drives the cover to reach the closed position, the actuating portion abuts against the switch assembly to generate a stop signal, and the driving member stops driving the cover in response to the stop signal, thereby maintaining the cover in the closed position. When the cover is pressed by an external force, the actuating portion actuates the switch assembly to generate a drive signal, and the driving member drives the cover to move from the closed position toward the open position in response to the drive signal.

According to a third aspect of the present disclosure, the present disclosure also provides a vehicle comprising a fueling or charging port cover according to the first or second aspect.

The fueling or charging port cover device of the present disclosure has a driving member, a cover and a switch assembly. The switch assembly comprises an elastic device for providing the switch assembly with a holding force, and the switch assembly has a holding state and an actuated state. When the driving member drives the cover to reach the closed position, the switch assembly is maintained in the holding state by the holding force provided by the elastic device and causes the driving member to stop driving the cover, thereby maintaining the cover in the closed position. When the switch assembly reaches the actuated state as the movement of the cover overcomes the holding force, the switch assembly is actuated and the driving member can drive the cover to move from the closed position toward the open position. The fueling or charging port cover device of the present disclosure uses the switch assembly as a stopping mechanism to cause the driving member to stop driving the cover, without needing to provide stopping bumps on the housing to stop the driving member from driving the cover. Therefore, when there is a need to press the cover to actuate the switch assembly to open the cover, the present disclosure facilitates increasing the effective pressing region of the cover and makes it easier for the operator to operate. Moreover, the fueling or charging port cover device of the present disclosure does not require an additional stopping mechanism.

### Brief Description of Drawings

Fig. 1A is a perspective view of a fueling or charging port cover device of the present disclosure;
Fig. 1B is an exploded view of the fueling or charging port cover device of Fig. 1A;
Fig. 2A is a perspective view of the cover in Fig. 1B;
Fig. 2B is a perspective view of the cover of Fig. 2A from another angle;
Fig. 3A is a perspective view of the housing in Fig. 1B;
Fig. 3B is a perspective view of the housing of Fig. 3A from another angle;
Fig. 4A is a perspective view of the switch assembly in Fig. 1B;
Fig. 4B is exploded view of the switch assembly of Fig. 4A;
Fig. 4C is a cross-sectional view of the switch assembly of Fig. 4A;
Fig. 5A is a perspective view of the support member in Fig. 4B;
Fig. 5B is a perspective view of the support member of Fig. 5A from another angle;
Fig. 6 is a perspective view of the movable member in Fig. 4B;
Fig. 7 is a perspective view of the elastic member in Fig. 4B;
Fig. 8 is a perspective view of the actuated member in Fig. 4B;
Fig. 9A is a schematic cross-sectional view of the fueling or charging port cover device of Fig. 1A when the cover is in the open position;
Fig. 9B is a schematic cross-sectional view of the fueling or charging port cover device of Fig. 1A when the cover is in the closed position;
Fig. 9C is a schematic cross-sectional view of the fueling or charging port cover device of Fig. 1A when the switch assembly is in the actuated state;
Fig. 10A is a schematic view of the outer side of a cover according to a design;
Fig. 10B is a schematic view of the outer side of a cover according to the present disclosure.

### Reference Numerals:

fueling or charging port cover device 100; housing 101; cover 102; switch assembly 103; driving member 104; cover body 211; connecting portion 212; seal 213; protrusion 215; inner side 221; outer side 222; shaft 266; contact surface 268; pressable region 288; body portion 301; side portion 302; bottom 325; sidewall 326; receiving space 328; working opening 331; switch opening 333; switch bracket 345; accommodating space 368; driving member mounting portion 369; hole 380; movable member 401; elastic member 402; support member 403; actuated member 404; spring channel 713; installation space 580; top 509; guiding channel 516; guiding channel 517; pressing channel 518; stepped portion 520; connecting protrusion 542; connecting protrusion 543; clamping foot 585, 586; pressing portion 602; guiding portion 603; guiding portion 604; actuating portion 605; connecting post 606; limiting protrusion 631, 632; actuating surface 651; recess 804; main body 811; actuated portion 812; wiring portion 813; stopping bump 1001,1002; first region 1031; second region 1032.

### Detailed Description of Embodiments

Various specific embodiments of the present disclosure will be described below with reference to the accompanying drawings, which constitute a part of this specification. It should be understood that although directional terms such as "front," "rear," "upper," "lower," "left," "right," "top," "bottom," etc. are used in the present disclosure to describe various exemplary structural parts and elements of the present disclosure, these directional terms are used herein only for convenience of description and are determined based on the exemplary orientations shown in the drawings. Since the embodiments disclosed in the present disclosure can be arranged in different orientations, these directional terms are for illustration only and should not be construed as limiting.

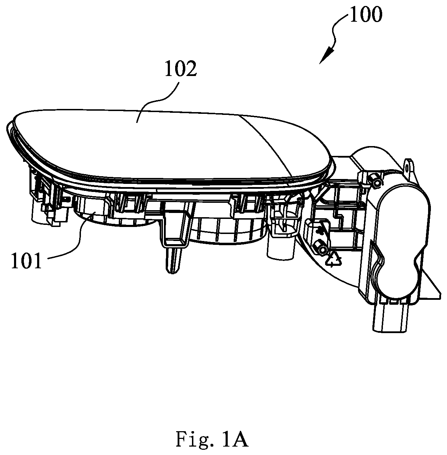

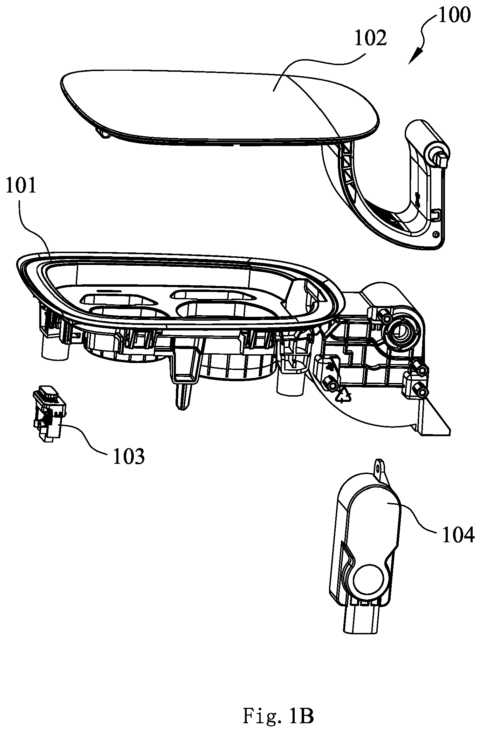

Fig. 1A is a perspective view of a fueling or charging port cover device 100 of the present disclosure, and Fig. 1B is an exploded view of the fueling or charging port cover device 100 of Fig. 1A. As shown in Figs. 1A and 1B, the fueling or charging port cover device 100 includes a housing 101, a cover 102, a switch assembly 103, and a driving member 104. The cover 102 is connected to the housing 101, and is movable relative to the housing 101 such that the cover 102 has an open position and a closed position. The driving member 104 is connected to the cover 102 and drives the cover 102 to move. The switch assembly 103 is disposed on the housing 101 and can cooperate with the cover 102. In the present disclosure, when the cover 102 is in the closed position, an operator can press the cover 102 to actuate the switch assembly 103, thereby opening the cover 102.

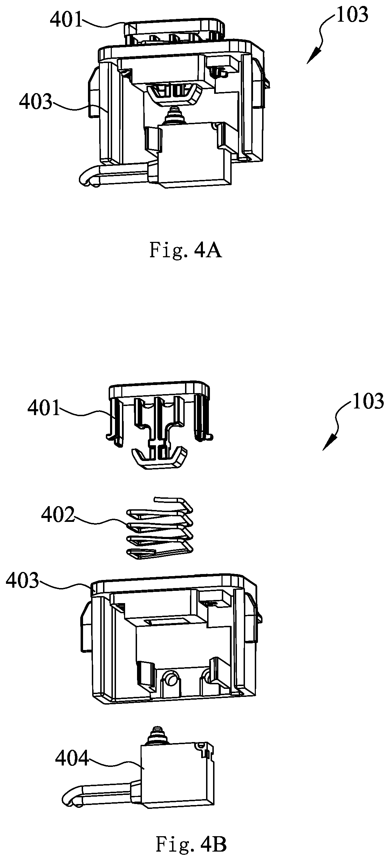

Those skilled in the art will appreciate that, in other embodiments, the switch assembly 103 may be disposed on the cover 102 and cooperate with a corresponding portion of the housing 101. Alternatively, a portion of the switch assembly 103 may be disposed on the housing 101 and the other portion on the cover 102, with the portion of the switch assembly 103 disposed on the housing 101 cooperating with the portion of the switch assembly 103 disposed on the cover 102. For example, the movable member 401 and the actuated member 404 of the switch assembly 103 shown in Fig. 4B are respectively disposed on the housing 101 and the cover 102.

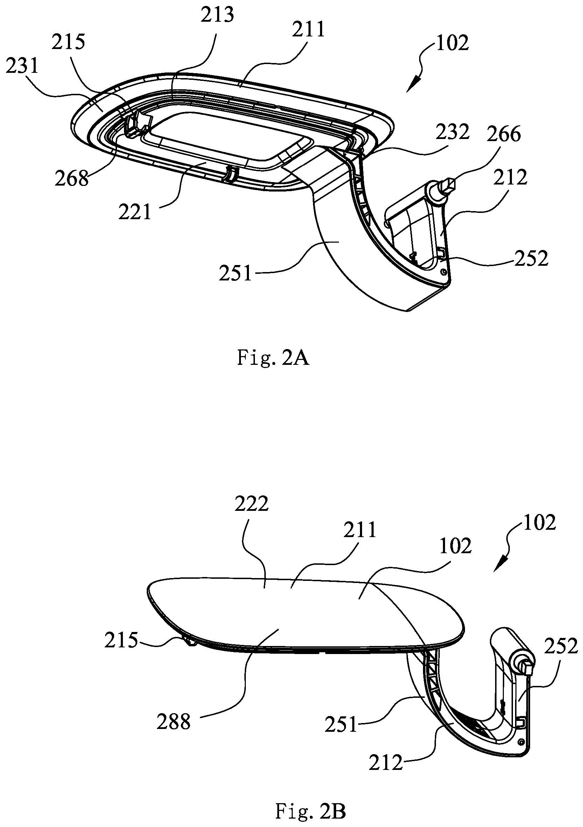

Fig. 2A is a perspective view of the cover 102 in Fig. 1B, and Fig. 2B is a perspective view of the cover 102 of Fig. 2A from another angle. As shown in Figs. 2A and 2B, the cover 102 includes a cover body 211, a connecting portion 212, a seal 213 and a protrusion 215. In this embodiment, the protrusion 215 forms an actuating portion of the present disclosure for actuating the switch assembly 103. Those skilled in the art will appreciate that, in some embodiments, the actuating portion may be formed by other shaped components capable of actuating the switch assembly 103, and in other embodiments, the actuating portion may be arranged on the housing 101 or other locations as required.

The cover body 211 includes an inner side 221 and an outer side 222 opposite to each other. The inner side 221 faces the housing 101 (see Fig. 1A), i.e., faces the vehicle body. The outer side 222 forms an operating surface that can be pressed by an operator. The seal 213 is connected to the inner side 221 of the cover body 211 and is sized slightly smaller than the cover body 211. The seal 213 is made of an elastic material to have a certain degree of elasticity, allowing it to fit against a corresponding position of the housing 101 (see Fig. 1A) and form a seal with the housing 101. Furthermore, the seal 213 has a cushioning effect, reducing noise generated by the collision between the cover body 211 and the housing 101 during the closing process.

The cover body 211 further includes a first end 231 and a second end 232 opposite to each other. The protrusion 215 and the connecting portion 212 are respectively connected to the first end 231 and the second end 232 of the cover body 211, and the connections of the protrusion 215 and the connecting portion 212 with the cover body 211 are located on the inner side 221 of the cover body 211. The outer side 222 of the cover body 211 has a pressable region 288, which constitutes most region of the outer side 222 of the cover body 211. In one embodiment of the present disclosure, the area of the pressable region 288 is not less than 60% of the area of the outer side 222 of the cover body 211. In one embodiment of the present disclosure, the area of the pressable region 288 is not less than 70% of the area of the outer side 222 of the cover body 211.

The connecting portion 212 includes a first portion 251 and a second portion 252. The first portion 251 incudes a curved arc-shaped portion, and is connected to the cover body 211 at one end and connected to the second portion 252 at the other end. The second portion 252 extends from the first portion 251 toward the cover body 211 and is provided with a shaft 266 at its distal end. The cover 102 is pivotally connected to the housing 101 via the shaft 266. The shaft 266 forms a pivoting portion of the cover 102. The shaft 266 is fixedly connected to the cover 102 and is also connected to the driving member 104. The driving member 104 can drive the shaft 266 to rotate, thereby causing the cover 102 to rotate. In a direction from the first end 231 to the second end 232 of the cover body 211, the shaft 266 and the first end 231 are respectively located at opposite sides of the second end 232. The protrusion 215 extends from the inner side of the cover body 211 in a direction away from the cover body 211, and has a contact surface 268 at its distal end, which can cooperate with the switch assembly 103.

Although not shown in the drawings, the cover 102 may further include an inner cover and an outer cover that are coupled together. The inner cover is disposed on the side of the cover 102 facing the housing 101, and the outer cover is disposed on the side of the cover 102 facing away from the housing 101. The actuating portion (e.g., the protrusion 215) of the present disclosure may be disposed on the inner cover, near the first end 231 of the cover body 221. According to certain embodiments, the actuating portion extends from the inner cover, i.e., the actuating portion and the inner cover may be integrally formed. Alternatively, the actuating portion may be connected to the inner cover by means such as snapping, welding, or bonding. According to certain embodiments, an outer periphery of the outer cover may extend beyond an outer periphery of the inner cover, i.e., the outer cover has a larger size than the inner cover, and the outer cover covers the inner cover. The actuating portion of the present disclosure may be disposed on the outer cover beyond the outer periphery of the inner cover. According to certain embodiments, the actuating portion extends from the outer cover, i.e., the actuating portion and the outer cover may be integrally formed. Alternatively, the actuating portion may be connected to the outer cover by means such as snapping, welding, or bonding.

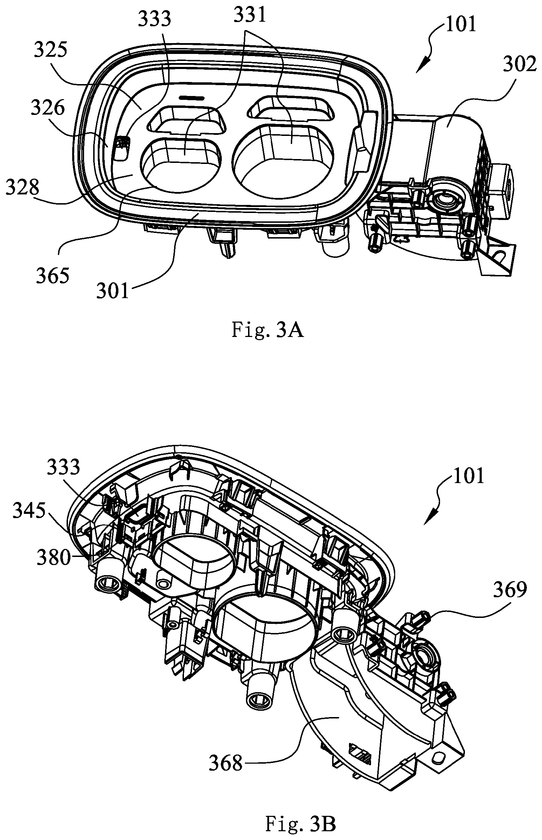

Fig. 3A is a perspective view of the housing 101 in Fig. 1B, and Fig. 3B is a perspective view of the housing 101 of Fig. 3A from another angle. As shown in Figs. 3A and 3B, the housing 101 includes a body portion 301 and a side portion 302. The body portion 301 aligns with the area of the fueling or charging port of the vehicle. The body portion 301 has a cavity 365 which can be covered by the cover body 211 (see Fig. 2A). The cover body 211 covers the cavity 365 in the closed position and exposes the cavity 365 in the open position. The body portion 301 includes a bottom 325 and a sidewall 326. The sidewall 326 extends from the periphery of the bottom 325 and defines a receiving space 328 together with the bottom 325 for receiving at least a portion of the cover body 211 (see Fig. 2A). The bottom 325 is provided with working openings 331 and a switch opening 333 extending through opposite sides of the bottom 325. The working openings 331 are used for installing charging ports or a fueling ports, and the switch opening 333 is used for installing the switch assembly 103 (see Fig. 1B). The body portion 301 includes a switch bracket 345 which extends from a side of the body portion 301, faces the interior of the vehicle and is disposed around the switch opening 333. The switch bracket 345 is provided with a plurality of holes 380 for mating with corresponding portions of the switch assembly 103 to mount the switch assembly 103. The side portion 302 is connected to one side of the body portion 301 and includes an accommodating space 368 and a driving member mounting portion 369. The accommodating space 368 and the driving member mounting portion 369 are used for mounting the connecting portion 212 of the cover 102 (see Fig. 2A) and the driving member 104 (see Fig. 1B), respectively. Although not shown in the drawings, those skilled in the art will appreciate that the switch assembly 103 may also be disposed at any position on the housing 101, such as at the peripheral edge of the cavity 365 of the housing 101, on a stepped surface of the body portion 301 of the housing 101, or the like. The switch assembly 103 may also be disposed at the actuating portion (e.g., a protrusion 215), more specifically, mounted near the contact surface 268 of the protrusion 215 and kept at a distance from the contact surface 268 or in contact with the contact surface 268 but without any force therebetween, so as to prevent an operator from accidentally pressing the switch assembly 103 when the cover 102 is in the open position.

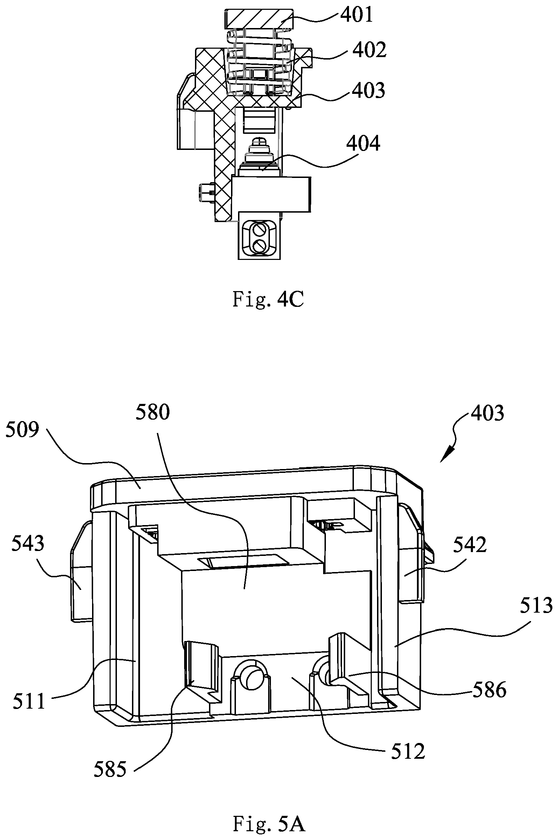

Fig. 4A is a perspective view of the switch assembly 103 in Fig. 1B. Fig. 4B is an exploded view of the switch assembly 103 of Fig. 4A. Fig. 4C is a cross-sectional view of the switch assembly 103 of Fig. 4A. One of the housing 101 and the cover 102 is connected to the switch assembly 103, and the other is provided with an actuating portion (e.g. the protrusion 215). As shown in Figs. 4A and 4B, the switch assembly 103 includes a movable member 401, an elastic member 402, a support member 403 and an actuated member 404. The support member 403 is connected to the housing 101 or the cover 102, and supports the movable member 401, the elastic member 402 and the actuated member 404. The movable member 401 is slidably connected to the support member 403. The elastic member 402 is disposed between the movable member 401 and the support member 403, and provides an elastic force to the movable member 401 so that the movable member 401 tends to move in a direction away from the support member 403. The actuated member 404 is disposed on the support member 403 at one side of the movable member 401. The movable member 401 is movable relative to the support member 403 to come into contact or separate from the actuated member 404. In the position as shown in Fig. 4A, the movable member 401 keeps a distance from the actuated member 404 when no external force is applied to the movable member 401.

Those skilled in the art will appreciate that, in some embodiments, the movable member 401 is configured to contact the actuated member 404 when no external force is applied to the movable member 401.

In this embodiment, the elastic member 402 is elastic, thus forming an elastic device of the switch assembly 103 in the present disclosure, and can provide a holding force and a resetting force for the switch assembly103. The switch assembly 103 can be kept in a holding state by the holding force provided by the elastic member 402, and return from an actuated state to the holding state by the restoring force provided by the elastic member 402.

Those skilled in the art will appreciate that in other embodiments, the movable member 401 may be made of an elastic material. At least a portion of the movable member 401 has elasticity, and can provide a holding force and a resetting force for the switch assembly 103, such that the movable member 401 forms the elastic device of the switch assembly 103 in the present disclosure. At least a portion of the movable member 401 can be driven to move by the protrusion 215 of the cover 102, thereby actuating the switch assembly 103. When the movable member 401 includes a portion made of an elastic material, no additional elastic member is required since the switch assembly 103 includes the movable member 401.

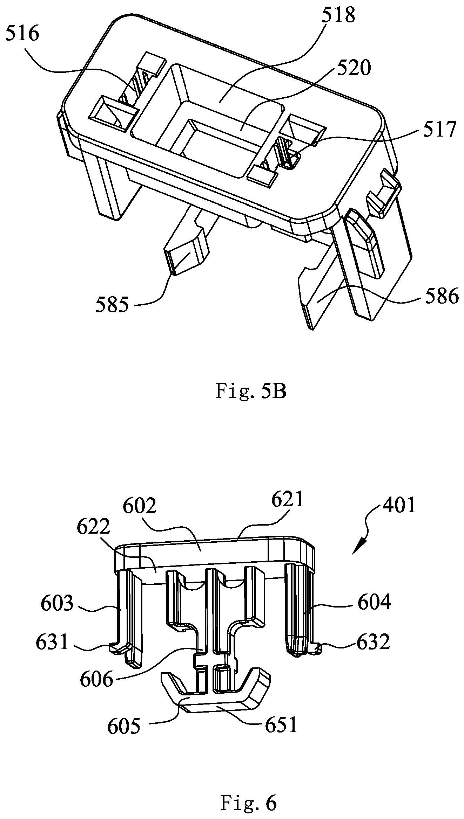

Fig. 5A is a perspective view of the support member 403 in Fig. 4B, and Fig. 5B is a perspective view of the support member 403 from another angle. As shown in Figs. 5A and 5B, the support member 403 includes a top 509, a first sidewall 511, a second sidewall 512 and a third sidewall 513. The first sidewall 511, the second sidewall 512, and the third sidewall 513 extend from three side edges of the top 509 and are connected to each other, thereby together with the top portion 509 defining an installation space 580 which is open on two sides, so as to facilitate installation of the actuated member 404 (see Fig. 4B). The top 509 includes a pressing channel 518 and guiding channels 516 and 517. The guiding channels 516 and 517 are respectively disposed at two sides of the pressing channel 518. The pressing channel 518 is provided with a stepped portion 520 therewithin for mounting the elastic member 402. The first sidewall 511 and the third sidewall 513 are respectively provided with connecting protrusions 543 and 542 for mating with the holes 380 on the switch bracket 345 of the housing 101 (see Fig.3B), so as to connect the support member 403 to the housing 101. The second sidewall 512 is provided with a pair of clamping feet 585 and 586 for clamping the actuated member 404 (see Fig. 4B).

Fig. 6 is a perspective view of the movable member 401 in Fig. 4B. As shown in Fig. 6, the movable member 401 includes a pressing portion 602, guiding portions 603 and 604, an actuating portion 605, and a connecting post 606. The pressing portion 602 is generally plate-shaped and has a first side 621 and a second side 622 opposite to each other. The first side 621 faces the cover 102, and the guiding portions 603 and 604 and the connecting post 606 are connected to the second side 622. The guiding portions 603 and 604 are respectively disposed at two sides of the connecting post 606. The guiding portions 603 and 604 are respectively provided with outwardly protruding limiting protrusions 631 and 632 at their distal ends. The actuating portion 605 is connected to the distal end of the connecting post 606. The end surface of the actuating portion 605 forms an actuating surface 651.

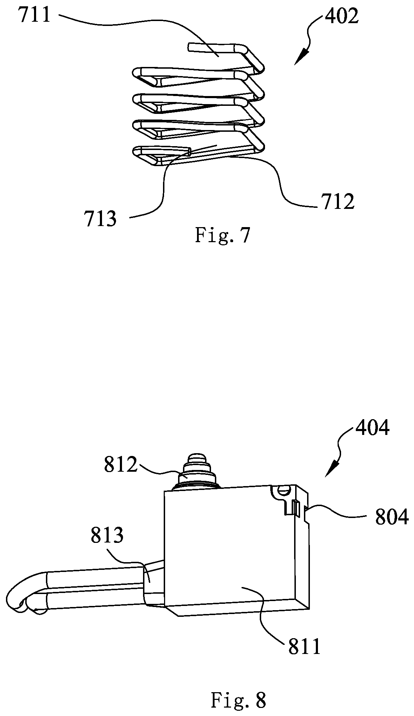

Fig. 7 is a perspective view of the elastic member 402 in Fig. 4B. As shown in Fig. 7, the elastic member 402 is a spring and has a first end 711 and a second end 712. The elastic member 402 is formed by a wire helically extending, with a spring channel 713 formed in the middle thereof.

In another embodiment of the present disclosure, the elastic member 402 may be other elastic devices, such as a torsion spring, a resilient piece, or a part made of a deformable elastic material.

Fig. 8 is a perspective view of the actuated member 404 in Fig. 4B. In one embodiment of the present disclosure, the actuated member 404 is a microswitch including a main body 811, an actuated portion 812 and a wiring portion 813. The main body 811 is provided with recesses 804 for mating with the clamping feet 586 and 588 of the support member 403. The actuated member 812 is connected to one side of the main body 811 and can be actuated by coming into contact with the movable member 401. The wiring portion 813 is connected with the main body 811 for connecting the actuated member 404 to the control system of the vehicle.

As shown in conjunction with Figs. 4A to 8, the movable member 401 is at least partially mounted within the support member 403 with the connecting post 606 of the movable member 401 disposed in the pressing channel 518 of the support member 403 and the guiding portions 603 and 604 of the movable member 401 respectively disposed in the guiding channels 516 and 517. The movable member 401 is movable along the extending direction of the guiding channels 516 and 517. The elastic member 402 is disposed between the pressing portion 602 of the movable member 401 and the stepped portion 520 of the support member 403 with the first end 711 and the second end 712 of the elastic member 402 respectively abutting against the pressing portion 602 and the stepped portion 520. The connecting post 606 of the movable member 401 passes through the spring channel 713. The elastic member 402 is in the compressed state, thereby applying an elastic force to the movable member 401, so that the movable member 401 is kept at a position away from the stepped portion 520. The limiting protrusion 631 of the guiding portion 603 and the limiting protrusion 632 of the guiding portion 604 are respectively located on one side of the guiding channels 516 and 517 and respectively abut against the edges of the guiding channels 516 and 517, thereby limiting the distance by which the movable member 401 moves in the direction away from the stepped portion 520. The actuated member 404 is connected to the clamping feet 585 and 586 of the support member 403 and is disposed at one side of the movable member 401. The actuated portion 812 of the actuated portion 404 aligns with the actuating surface 651 of the movable member 401, and the elastic member 402 keeps the actuating surface 651 at a position far away from the actuated portion 812 when no external force is applied.

In one embodiment of the present disclosure, the switch assembly 103 does not include a support member 403, but the housing 101 is provided with a corresponding mounting structure, such that the movable member 401, the elastic member 402, and the actuated member 404 can be directly mounted to the housing 101.

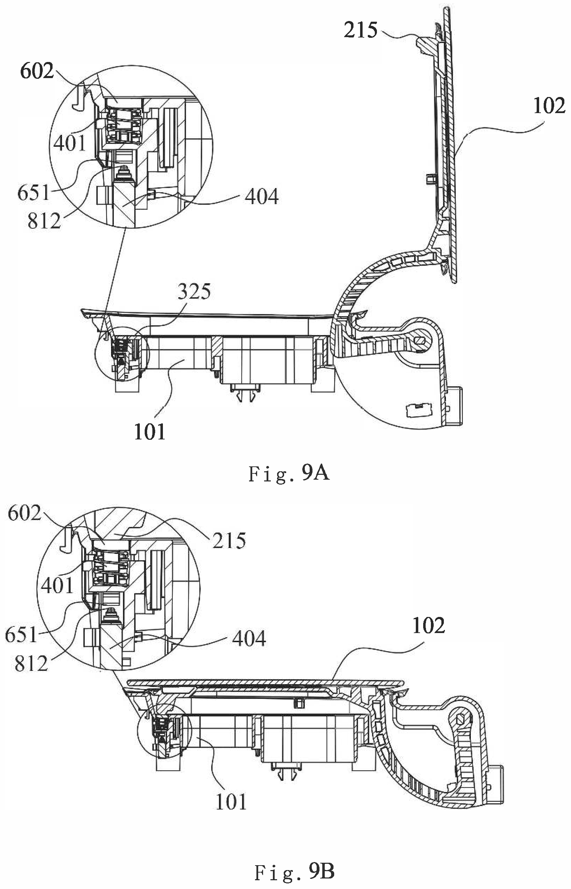

Fig. 9A is a schematic cross-sectional view of the fueling or charging port cover device 100 of Fig. 1A when the cover 102 is in the open position. Fig. 9B is a schematic cross-sectional view of the fueling or charging port cover device 100 of Fig. 1A when the cover 102 is in the closed position. Fig. 9A is a schematic cross-sectional view of the fueling or charging port cover device 100 of Fig. 1A when the switch assembly 103 is in the actuated state.

As shown in Figs. 9A to 9C, the cover 102 of the fueling or charging port cover device 100 in the present disclosure is movable between the open position and the closed position relative to the housing 101 under the drive of the driving member 104, and is movable from the closed position toward the housing 101 to achieve an actuated state of the switch assembly 103 when an external force is applied. The movable member 401 has a first position and a second position. When the movable member 401 is in the first position, the switch assembly 103 is in a holding state; when the movable member 401 is in the second position, the switch assembly 103 is in an actuated state.

In one embodiment of the present disclosure, the movable member 401 has an initial position, a first position, and a second position. When the movable member 401 is in the initial position (See Fig. 9A), it is in a state free of external force. At this stage, the driving member 104 drives the cover 102 to rotate until the protrusion 215 of the cover 102 comes into contact with the pressing portion 602 of the movable member 401 without generating any interaction force. Then, the driving member 104 continues to drive the cover 102 to move toward the closed position until the movable member 401 reaches the first position (See Fig. 9B). When the movable member 401 is in the first position, the driving member 104 stops driving the cover 102, the cover 102 reaches the closed position, and the switch assembly 103 is in a holding state. When the movable member 401 moves from the initial position to the first position, the movable member 401 may or may not undergo displacement.

In one embodiment of the present disclosure, when the movable member 401 is in the first position, the pressing portion 602 flushes with or is slightly higher than the mounting surface of the housing 101.

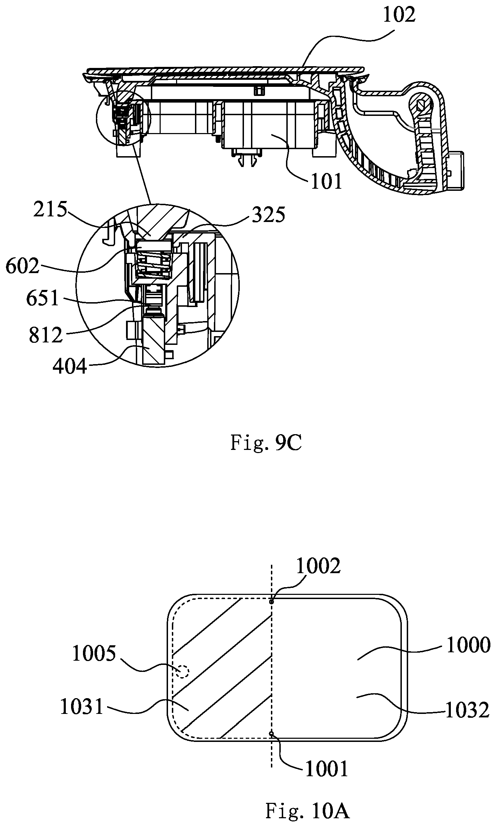

When the cover 102 is in the closed position as shown in Fig. 9B, the movable member 401 is in the first position and the switch assembly 103 is in the holding state. When the switch assembly 103 is in the actuated state as shown in Fig. 9C, the movable member 401 is in the second position. In one embodiment of the present disclosure, the movable member 401 is at a distance from the actuated member 404 when the movable member 401 is in the first position, and contacts the actuated member 404 when the movable member 401 is in the second position.

As shown in conjunction with Figs. 1A to 9C, the driving member 104 is connected to the shaft 266 of the cover 102. The driving member 104 drives the shaft 266 to rotate, so that the cover 102 rotates relative to the housing 101. In one embodiment of the present disclosure, the driving member 104 stops driving the cover 102 upon encountering a certain resistance, so that the cover 102 is maintained in the open position or the closed position. When the cover 102 is in the open position as shown in Fig. 9A, the working openings 331 are exposed, allowing an operator to perform charging or fueling operation. When the cover 102 is in the closed position as shown in Fig. 9B, the cover 102 covers the working openings 331.

When the cover 102 moves from the open position to the closed position under the drive of the driving member 104, the cover 102 rotates toward the housing 101 until the protrusion 215 of the cover 102 comes into contact with the pressing portion 602 of the movable member 401, where the cover 102 reaches the closed position. When the protrusion 215 abuts against the pressing portion 602 of the movable member 401, a stop signal is generated. Upon receiving the stop signal, the control system issues a command to the driving member 104. Thus, the driving member 104, responsive to the stop signal, stops further driving the cover 102 to rotate, thereby retaining the cover 102 in the closed position.

When the protrusion 215 contacts the pressing portion 602, if the driving member 104 continues to drive the cover 102 to rotate, the cover 102 will experience resistance from the pressing portion 602. The elastic member 402 provides a holding force to the movable member 401, keeping the movable member 401 in the first position and preventing it from moving toward the actuated member 404. Thus, the elastic member 402 provides resistance to the cover 102 through the movable member 401 to prevent further movement of the cover 102. At this point, the switch assembly 103 is in the holding state. In one embodiment of the present disclosure, the driving member 104 is configured to stop driving the cover 102 to rotate when the resistance against the cover 102 reaches F1, thereby maintaining the cover 102 in the closed position. In one embodiment of the present disclosure, the value of F1 is set to be less than the elastic force F2 provided by the elastic member 402 to the pressing portion 602. The driving member 104 is configured such that it cannot drive the cover 102 to rotate to overcome the elastic force F2 of the elastic member 402. Thus, after the cover 102 reaches the closed position, the driving member 104 no longer continues to drive the cover 102 to move in the closing direction. Therefore, the switch assembly 103 can serve as a stopping mechanism during the closing process of the cover 102, functioning to terminate the movement of the cover 102 in the closing direction.

In one embodiment of the present disclosure, the driving member 104 is a rotary actuator that includes a motor having a stall function, such that when a certain resistance is encountered, a stop signal is generated to command the driving member 104 to stop driving the cover 102 from moving further.

In another embodiment of the present disclosure, the fueling or charging port cover device 100 is provided with a sensor configured to send a stop signal when the cover 102 reaches the closed position, such that the driving member 104 is commanded to stop driving the cover 102 from moving further.

In one embodiment of the present disclosure, when the cover 102 is in the closed position, the movable member 401 is in the first position and the actuating surface 651 of the movable member 401 keeps a distance away from the actuated portion 812 of the actuated member 404, so that the actuated member 404 cannot be actuated. The distance between the actuating surface 651 and the actuated portion 812 can be set as required to prevent false actuating.

In another embodiment of the present disclosure, when the cover 102 is in the closed position, the movable member 401 is in the first position, and the actuating surface 651 is in contact with the actuated portion 812, i.e., the distance between the actuating surface 651 and the actuated portion 812 is zero. However, at this point, the actuated member 404 is not actuated. The actuated member 404 is actuated when the movable member 401 applies a certain amount of force to the actuated member 404.

When the cover 102 is in the closed position, a continuously extending gap is provided between the cover body 211 and the housing 101. That is, the cover body 211 is not in direct contact with the housing 101. The seal 213 is disposed between the cover body 211 and the housing 101 and is in contact with both the cover body 211 and the housing 101, thereby filling the gap between the cover body 211 and the housing 101 and supporting the cover body 211 to prevent the cover body 211 from shaking relative to the housing 101. The seal 213 has a certain elasticity and is compressible. When an external force is applied to the cover 102, the seal 213 can deform, thereby allowing the cover body 211 to move toward the housing 101.

When the cover 102 is in the closed position (as shown in Fig. 9B), an operator can open the cover 102 by pressing the cover 102. The operator applies a force to the pressable region 288 on the outer side of the cover 102, causing the cover body 211 to move toward the housing 101. When the force applied by the protrusion 215 of the cover 102 on the pressing portion 602 is sufficient to overcome the elastic force provided by the elastic member 402, the protrusion 215 pushes the movable member 401 to move toward the actuated member 404, such that the actuating surface 651 of the movable member 401 comes into contact with the actuated portion 812 of the actuated member 404. The movable member 401 thus reaches the second position, thereby actuating the actuated member 404 to generate a first drive signal. At this point, the switch assembly 103 is in the actuated state. Once the actuated member 404 is actuated, the control system receives the first drive signal and controls the driving member 104 to drive the cover 102 to move toward the open position. When the operator releases the applied external force, the elastic member 402 provides a restoring force to the movable member 401, pushing it back to the first position.

In the present disclosure, when the operator presses the cover 102 to perform the opening operation, the movable member 401 moves simultaneously with the cover 102 until the actuated member 404 is actuated. When the operator presses the cover 102, the operator may press any position of the pressable region 288, and any such pressing can push the cover 102 to move, thereby achieving actuation.

In one embodiment of the present disclosure, when the cover 102 is in the open position, if the actuated member 404 of the switch assembly 103 is actuated, a second drive signal is generated. Then, upon receiving the second drive signal, the control system controls the driving member 104 to drive the cover 102 to move from the open position toward the closed position.

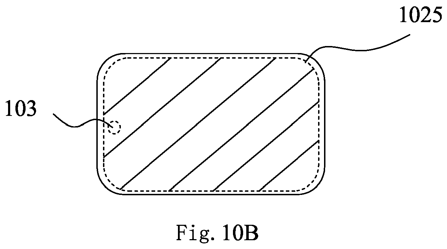

Fig. 10A is a schematic view of the outer side of a cover according to a design, and Fig. 10B is a schematic view of the outer side of the cover according to the present disclosure. As shown in Fig. 10A, in one design, the housing is provided with fixed stopping bumps 1001 and 1002. When the cover 1000 comes into contact with the stopping bumps 1001 and 1002 on the housing, the cover 1000 reaches the closed position. The stopping bumps 1001 and 1002 are made of the same hard material as the housing or the cover. The stopping bumps 1001 and 1002 divide the cover body into a first region 1031 and a second region 1032. When an operator presses the cover body, the stopping bumps 1001 and 1002 cannot move together with the cover. If an operator presses a position in the second region 1032, which is far away from the switch assembly 1005, the stopping bumps 1001 and 1002 prevent the first region 1031 of the cover body from moving toward the housing, thus the operator's pressing action cannot actuate the switch assembly 1005. If the operator presses a position in the first region 1031, which is close to the switch assembly 1005, the first region 1031 moves toward the housing and can actuate the switch assembly 1005. Therefore, the effective pressing region of the cover in the embodiment of Fig. 10A is small, affecting the operating comfort of the operator.

As shown in Fig. 10B, in the present disclosure, no stopping bumps are provided on the housing or the cover body. Instead, a structure having a stopping function is provided on the switch assembly 103. A continuous gap is provided between the housing and the cover body. When the operator presses any position in most region 1025 of the cover body, the cover body can move toward the housing to actuate the switch assembly 103. Most region of the cover body is a pressable region.

Although the present application has been described with reference to the examples of the embodiments outlined above, various alternatives, modifications, variations, improvements, and/or substantial equivalents, whether known or now or soon foreseeable to those of ordinary skill in the art, may be apparent. Moreover, the technical effects and/or technical problems described in this specification are exemplary rather than limiting; therefore, the disclosure in this specification may be used to solve other technical problems and have other technical effects and/or may solve other technical problems. Accordingly, the example embodiments of the present application set forth above are intended to be illustrative rather than restrictive. Various changes may be made without departing from the spirit or scope of the present application. Therefore, the present application is intended to include all known or early developed alternatives, modifications, variations, improvements, and/or substantial equivalents.

## Claims

1. A fueling or charging port cover device, **characterized by** comprising:
a housing (101 having a cavity (365);
a cover (102) having an open position and a closed position relative to the housing (101), the cover (102) covering the cavity (365) in the closed position and exposing the cavity (365) in the open position;
a driving member (104) connected to the cover (102) and configured to drive the cover (102) to move between the open position and the closed position relative to the housing (101); and
a switch assembly (103) comprising an elastic device configured to provide a holding force for the switch assembly (103), the switch assembly (103) having a holding state and an actuated state;
wherein, when the driving member (104) drives the cover (102) to reach the closed position, the switch assembly (103) is maintained in the holding state by the holding force provided by the elastic device and causes the driving member (104) to stop driving the cover (102), thereby maintaining the cover (102) in the closed position; and
wherein, when the switch assembly (103) reaches the actuated state as the movement of the cover (102) overcomes the holding force, the switch assembly (103) is actuated, such that the driving member (104) is allowed to drive the cover (102) to move from the closed position toward the open position.

2. The fueling or charging port cover device according to claim 1, **characterized in that**:
the elastic device further has a restoring force for returning the switch assembly (103) from the actuated state to the holding state.

3. The fueling or charging port cover device according to claim 1, **characterized in that**:
one of the housing (101) and the cover (102) is connected to the switch assembly (103), and the other is provided with an actuating portion, the actuating portion cooperating with the switch assembly (103) to enable the switch assembly (103) to reach the holding state and the actuated state.

4. The fueling or charging port cover device according to claim 1, **characterized in that**:
the cover (102) comprises a pressable region (288), and the area of the pressable region (288) being not less than 60% of the area of the cover (102).

5. The fueling or charging port cover device according to claim 3, **characterized in that**:
the switch assembly (103) comprises a movable member (401), at least a portion of the movable member (401) being elastic to form the elastic device, and at least a portion of the movable member (401) being configured to move under the drive of the actuating portion to enable the switch assembly (103) to reach the holding state and the actuated state.

6. The fueling or charging port cover device according to claim 3, **characterized in that**:
the switch assembly (103) comprises a movable member (401) and an elastic member (402), the elastic member (402) forming the elastic device, the elastic member (402) being connected to the movable member (401) and providing an elastic force to the movable member (401), and the movable member (401) being configured to move under the drive of the actuating portion to enable the switch assembly (103) to reach the holding state and the actuated state.

7. The fueling or charging port cover device according to claim 6, **characterized in that**:
the switch assembly (103) comprises an actuated member (404), wherein the movable member (401) is movable relative to the actuated member (404) to actuate the actuated member (404), thereby causing the switch assembly (103) to reach the actuated state.

8. The fueling or charging port cover device according to claim 6, **characterized in that**:
the cover (102) is pivotally connected to the housing (101), and when the driving member (104) drives the cover (102) to move from the open position toward the closed position, the driving member (104) stopping driving the cover (102) to rotate in response to the actuating portion of the cover (102) coming into contact with the movable member (401).

9. The fueling or charging port cover device according to claim 1, **characterized in that**:
the switch assembly (103) is configured to change from the holding state to the actuated state when a certain pressing force is applied to the cover (102).

10. The fueling or charging port cover device according to claim 1, **characterized in that**:
the driving member (104) is configured to drive the cover (102) to move from the open position toward the closed position when the cover (102) is in the open position and the switch assembly (103) is actuated to reach the actuated state.

11. The fueling or charging port cover device according to claim 7, **characterized in that**:
the switch assembly (103) comprises a support member (403), the support member (403) being connected to the housing (101) or the cover (102) and supporting the movable member (401), the elastic member (402), and the actuated member (404).

12. The fueling or charging port cover device according to claim 7, **characterized in that**:
the actuated member (404) comprises a microswitch, and the driving member (404) driving the cover (102) to move from the closed position toward the open position in response to the actuated member (404) being actuated by the movable member (401).

13. A fueling or charging port cover device, **characterized by** comprising:
a housing (101) having a cavity (365);
a cover (102) having a pivoting portion and pivotally connected to the housing (101) via the pivoting portion, the cover (102) having an open position and a closed position relative to the housing (101) and covering the cavity (365) in the closed position and exposing the cavity (365) in the open position;
a driving member (104) drivingly connected to the cover (102) to drive the cover (102) to move between the open position and the closed position relative to the housing (101); and
a switch assembly (103) and an actuating portion, the switch assembly (103) being disposed on the housing (103), the actuating portion extending from an end of the cover (102) remote from the pivoting portion;
wherein, when the driving member (104) drives the cover (102) to reach the closed position, the actuating portion abuts against the switch assembly (103) to generate a stop signal, and the driving member (104) stops driving the cover (102) in response to the stop signal, thereby maintaining the cover (102) in the closed position; and,
wherein, when the cover (102) is pressed by an external force, the actuating portion actuates the switch assembly (103) to generate a drive signal, and the driving member (104) drives the cover (102) to move from the closed position toward the open position in response to the drive signal.

14. A vehicle, **characterized by** comprising:
the fueling or charging port cover device (100) according to any one of claims 1-13.
